(19) Europäisches Patentamt / European Patent Office / Office européen des brevets

(11) **EP 4 776 346 A1**

(12) **EUROPEAN PATENT APPLICATION**
published in accordance with Art. 153(4) EPC

(43) Date of publication:
**15.07.2026 Bulletin 2026/29**

(21) Application number: **24863312.5**

(22) Date of filing: **20.08.2024**

(51) International Patent Classification (IPC):
**H01M 4/583** (2010.01)    **C01B 32/21** (2017.01)
**H01M 4/02** (2006.01)

(52) Cooperative Patent Classification (CPC):
**C01B 32/21; H01M 4/02; H01M 4/583;** Y02E 60/10

(86) International application number:
**PCT/KR2024/096057**

(87) International publication number:
**WO 2025/053733 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.09.2023 KR 20230117166**

(71) Applicant: **Posco Future M Co., Ltd.
Pohang-si, Gyeongsangbuk-do 37918 (KR)**

(72) Inventors:
• **MIN, Jin Wook
Pohang-si, Gyeongsangbuk-do 37918 (KR)**

• **LEE, Kyoung Muk
Pohang-si, Gyeongsangbuk-do 37918 (KR)**
• **SHIN, Myoungsoo
Pohang-si, Gyeongsangbuk-do 37918 (KR)**
• **KWON, Haejun
Pohang-si, Gyeongsangbuk-do 37918 (KR)**
• **KIM, Sumin
Pohang-si, Gyeongsangbuk-do 37918 (KR)**

(74) Representative: **Pfenning, Meinig & Partner mbB
Patent- und Rechtsanwälte
Theresienhöhe 11a
80339 München (DE)**

(54) **ANODE ACTIVE MATERIAL FOR LITHIUM SECONDARY BATTERY, AND MANUFACTURING METHOD THEREFOR**

(57) The present invention relates to a negative electrode active material for a lithium secondary battery and a method for manufacturing the same, wherein the negative electrode active material for a lithium secondary battery comprises natural graphite and satisfies the following Formula 1.

<Formula 1>

$$2.23 \leq [D_{90}]/[D_{10}] \leq 2.37$$

(In Formula 1, $[D_{10}]$ and $[D_{90}]$ refer to particle diameters corresponding to 10% and 90% of a cumulative volume of the negative electrode active material measured using a Laser Diffraction Method).

[FIG. 1a]

**Description**

**[TECHNICAL FIELD]**

The present invention relates to a lithium secondary battery, and more specifically, to a negative electrode active material for a lithium secondary battery and a method for manufacturing the same.

**[BACKGROUND ART]**

A lithium secondary battery is generally composed of a positive electrode including a positive electrode active material, a negative electrode including a negative electrode active material, a separator, and an electrolyte, and charging and discharging are performed by Intercalation-Deintercalation of lithium ions. The lithium secondary battery has advantages of high Energy Density, large electromotive force, and capability of exhibiting high capacity, so it is applied to various fields.

In addition, improving high-temperature performance such as high-temperature storage characteristics and high-temperature cycle characteristics in the lithium secondary battery is an important task to be solved. For example, if the internal total pore volume is high after applying the negative electrode active material to a current collector and rolling it, there is a high possibility that the high-temperature performance of the negative electrode deteriorates. Therefore, it is necessary to improve high-temperature characteristics when developing a negative electrode active material for a lithium secondary battery, for example, a secondary battery for fast charging, by minimizing changes in electrode structure and internal total pore volume occurring during electrode rolling.

Furthermore, as technology development and demand for mobile devices increase, the demand for secondary batteries as energy sources is rapidly increasing. Among secondary batteries, lithium secondary batteries exhibiting high energy density and operating potential, long cycle life, and low self-discharge rate have been commercialized and widely used.

Also, as interest in environmental issues grows, interest in electric vehicles and hybrid electric vehicles capable of replacing vehicles using fossil fuels such as gasoline vehicles and diesel vehicles, which are one of the main causes of air pollution, is increasing, and research on using lithium secondary batteries as power sources for the electric vehicles and the hybrid electric vehicles is actively being conducted.

Recently, due to the rapid rise of EV electric vehicles, expectations for the lithium secondary battery are growing, and demands for improvement in fast charging characteristics while preserving existing capacity are increasing. regarding the improvement of the fast charging, the role of the negative electrode active material responsible for storing lithium ions during charging is becoming important.

As a negative electrode active material for a lithium ion secondary battery used in conventional small batteries, graphite-based materials such as artificial graphite and natural graphite among carbon-based active materials have been mainly used, which accept or supply lithium ions reversibly while maintaining structural and electrical properties, and have a chemical potential almost similar to lithium metal during intercalation and deintercalation of lithium ions.

Artificial graphite has higher discharge efficiency relative to charge and less Swelling during charging and discharging than natural graphite, so it has excellent lifespan characteristics. However, compared to natural graphite, it has a problem that reversible capacity is low, particles are hard so that rolling is difficult during electrode manufacturing, and orientation is not well achieved due to little change in shape. In particular, there is a disadvantage that manufacturing cost is high because graphitization heat treatment at 3,000°C is required.

On the other hand, in the case of natural graphite, it is widely used as a negative electrode active material because it is cheaper than artificial graphite, has high reversible capacity, and exhibits similar electrochemical characteristics. However, since natural graphite has a plate-like shape, it has a large surface area and edge portions are exposed, so penetration or decomposition reaction of the electrolyte occurs, causing the edge portions to exfoliate or be destroyed, resulting in significant irreversible reactions, and increasing the expansion rate, which may degrade longterm lifespan characteristics.

In addition, lithium metal, which has been reviewed as a negative electrode material, has very high energy density and can implement high capacity, but has safety problems due to dendritic growth (Dendrite) during repeated charging and discharging and a problem of short cycle life. Besides, attempts have been made to use carbon nanotubes as a negative electrode active material, but problems such as low productivity of carbon nanotubes, high price, and low initial efficiency of 50% or less have been pointed out.

As another negative electrode material, as it became known that silicon, tin, or alloys thereof can reversibly occlude and release a large amount of lithium through a compound formation reaction with lithium, many studies thereon have been recently conducted. For example, silicon is promising as a high-capacity negative electrode material because its theoretical maximum capacity is about 4020 mAh/g (9800 mAh/cc, specific gravity 2.23), which is very large compared to graphite-based materials. However, the negative electrode material has disadvantages that volume change during charging and discharging is very large and high-rate discharge characteristics are not high.

Therefore, there is a need to improve the performance of negative electrode materials to exhibit low expansion rate, predetermined capacity, high output characteristics, and lifespan characteristics.

In this regard, particularly in the case of natural graphite, voids reduce the density of the negative electrode active material, making it difficult to manufacture a high-density negative electrode plate. In addition, in the process of densifying the negative electrode active material layer on the current collector, cracking of a low-crystalline carbon coating layer occurs, leading to exposure of the Edge surface of graphite, which causes problems of destruction by electrolyte and irreversible reactions.

Accordingly, various attempts are being made for negative electrode materials having excellent lifespan characteristics by improving high output characteristics and low expansion capability, and there is a high need for technology capable of simultaneously realizing high output characteristics and high energy density of the negative electrode material while fundamentally solving these problems.

**[DETAILED DESCRIPTION OF THE INVENTION]**

**[TECHNICAL PROBLEM]**

According to an embodiment of the present invention, a negative electrode active material for a lithium secondary battery provides a negative electrode active material capable of simultaneously realizing high output characteristics and high energy density.

According to another embodiment of the present invention, a method for manufacturing a negative electrode active material for a lithium secondary battery provides a method for manufacturing a negative electrode active material having the aforementioned advantages.

**[TECHNICAL SOLUTION]**

According to an embodiment of the present invention, a negative electrode active material for a lithium secondary battery comprises natural graphite and satisfies the following Formula 1.

$$<\text{Formula } 1>$$

$$2.23 \leq [D_{90}]/[D_{10}] \leq 2.37$$

(In Formula 1, $[D_{10}]$ and $[D_{90}]$ refer to particle diameters corresponding to 10% and 90% of a cumulative volume of the negative electrode active material measured using a Laser Diffraction Method).

In one embodiment, Formula 1 may be 2.26 to 2.36. Specifically, an average particle diameter ($D_{50}$) of the negative electrode active material may be 15.0 to 18.0 $\mu$m.

In one embodiment, pores measured by mercury intrusion porosimetry may be 0.045 to 0.085 ml/g. In one embodiment, a ratio of pores measured by mercury intrusion porosimetry may be 5.0 to 14.0%.

In one embodiment, the negative electrode active material for a lithium secondary battery may satisfy the following Formula 2.

$$<\text{Formula } 2>$$

$$0.50 \leq [\text{Tap Density (g/cm}^3)]/[\text{BET Specific Surface Area (m}^2/\text{g})] \leq 1.0$$

(The [Tap Density (g/cm$^3$)] and [BET Specific Surface Area (m$^2$/g)] refer to a tap density (g/cm$^3$) and a specific surface area of the negative electrode active material).

In one embodiment, regarding XRD peak values of the negative electrode active material for a lithium secondary battery, an orientation degree ($I_{110}/I_{004}$) satisfies the following Formula 3.

$$<\text{Formula } 3>$$

$$50.0 \leq I_{110}/I_{004} \leq 90.0$$

(In Formula 3, $I_{004}$ refers to a peak intensity value at a 004 plane, and $I_{110}$ refers to a peak intensity value at a 110 plane).

In one embodiment, the negative electrode active material for a lithium secondary battery may have a pellet density (g/cm$^3$) under 600 kgf/cm$^2$ of 1.50 to 1.85.

In one embodiment, the negative electrode active material for a lithium secondary battery may satisfy the following Formula 4.

<Formula 4>

$$0.100 \leq (P_{1000}-P_{600})/P_{400} \leq 0.119$$

(In Formula 4, $P_{400}$, $P_{600}$, and $P_{1000}$ refer to pellet densities at 400, 600, and 1,000 kgf/cm$^2$, respectively).

According to another embodiment of the present invention, a method for manufacturing a negative electrode active material for a lithium secondary battery comprises spheroidizing natural graphite particles and pressing the spheroidized natural graphite particles, and the negative electrode active material may satisfy the following Formula 1.

<Formula 1>

$$2.23 \leq [D_{90}]/[D_{10}] \leq 2.37$$

(In Formula 1, $[D_{10}]$ and $[D_{90}]$ refer to particle diameters corresponding to 10% and 90% of a cumulative volume of the negative electrode active material measured using a Laser Diffraction Method).

In one embodiment, the step of spheroidizing the natural graphite may include primary spheroidizing the natural graphite particles, and secondary re-spheroidizing the primary spheroidized natural graphite particles. In one embodiment, the step of pressing the spheroidized natural graphite particles may be performed through a Cold Isostatic Press (CIP) method or a Hot Isostatic Press (HIP) method.

In one embodiment, the step of pressing the spheroidized natural graphite particles may be applying a pressure of 250 MPa or more. In one embodiment, the step of spheroidizing the natural graphite particles may control an average particle diameter ($D_{50}$) of the natural graphite particles to be 14.0 to 18.0 $\mu$m.

In one embodiment, after the step of secondary re-spheroidizing the primary spheroidized natural graphite particles, the method may further comprise coating a low-crystalline carbon material on the re-spheroidized natural graphite particles.

**[ADVANTAGEOUS EFFECTS]**

According to an embodiment of the present invention, the negative electrode active material for a lithium secondary battery can provide a negative electrode active material capable of simultaneously realizing high output characteristics and high energy density by undergoing high-density spheroidization and Cold Isostatic Pressing to form pores on the surface, thereby improving mobility of lithium (Li) ions, and diversifying crystal orientation.

According to another embodiment of the present invention, the method for manufacturing a negative electrode active material for a lithium secondary battery can provide a method for manufacturing a negative electrode active material having the aforementioned advantages by undergoing high-density spheroidization and Cold Isostatic Pressing.

**[BRIEF DESCRIPTION OF THE DRAWINGS]**

FIGS. 1a to 1d show SEM photographs of cross-sections of negative electrode active materials according to Examples and Comparative Examples of the present invention.

FIGS. 2a and 2b are graphs of nitrogen porosity and mercury porosity according to Examples and Comparative Examples of the present invention.

FIG. 3 is a graph showing pellet density according to Examples and Comparative Examples of the present invention.

FIGS. 4a and 4b are graphs of room temperature lifespan and high temperature lifespan characteristics according to Examples and Comparative Examples of the present invention.

**[MODE FOR CARRYING OUT THE INVENTION]**

Terms such as first, second, and third are used to describe various parts, components, regions, layers, and/or sections, but are not limited thereto. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is for the purpose of describing particular embodiments only and is not intended to be limiting of the present invention. The singular forms used herein include plural forms unless the phrases clearly indicate the opposite. The meaning of "comprising" used in the specification specifies particular characteristics, regions, integers, steps, operations, elements, and/or components, and does not exclude the presence or addition of other characteristics, regions, integers, steps, operations, elements, and/or components.

When a part is referred to as being "on" or "above" another part, it may be directly on or above the other part, or other parts may be accompanied therebetween. In contrast, when a part is referred to as being "directly on" another part, no other part is interposed therebetween.

Unless defined otherwise, all terms including technical and scientific terms used herein have the same meaning as commonly understood by one of ordinary skill in the art to which the present invention belongs. Terms defined in commonly used dictionaries are further interpreted as having meanings consistent with the relevant technical literature and the presently disclosed content, and are not interpreted in an idealized or very formal sense unless defined.

Hereinafter, embodiments of the present invention will be described in detail. However, these are presented as examples, and the present invention is not limited thereby, and the present invention is only defined by the scope of the claims to be described later.

According to an embodiment of the present invention, a negative electrode active material for a lithium secondary battery may include natural graphite. Specifically, the natural graphite may include spherical natural graphite that has undergone a spheroidizing step to provide a negative electrode active material for a lithium secondary battery having a high degree of spheroidization.

In one embodiment, a degree of spheroidization of the negative electrode active material for a lithium secondary battery may be 0.90 or more. Specifically, the degree of spheroidization may be 0.925 or more, and more specifically, 0.925 to 0.934. When the degree of spheroidization satisfies the aforementioned range, the density and orientation of the negative electrode active material increase together, so that output characteristics and expansion characteristics of the negative electrode active material can be improved.

In one embodiment, the negative electrode active material for a lithium secondary battery may satisfy the following Formula 1.

<Formula 1>

$$2.23 \leq [D_{90}]/[D_{10}] \leq 2.37$$

(In Formula 1, $[D_{10}]$ and $[D_{90}]$ refer to particle diameters corresponding to 10% and 90% of a cumulative volume of the negative electrode active material measured using a Laser Diffraction Method).

Formula 1 is a value obtained by dividing the particle diameter corresponding to 90% of the cumulative volume of the negative electrode active material by the particle diameter corresponding to 10%, and may be an index for particle size distribution according to conditions of airflow classification and sieving classification in the manufacturing process of the negative electrode active material. Formula 1 may be 2.23 to 2.37. Specifically, Formula 1 may be 2.23 to 2.36, and more specifically, 2.30 to 2.36.

When Formula 1 exceeds the upper limit value, the ratio of coarse powder is relatively high, causing a problem of spring back of the electrode. When Formula 1 is less than the lower limit value, the amount to be classified increases, causing a problem in process yield.

In one embodiment, the particle diameter ($D_{10}$) corresponding to 10% of the cumulative volume of the negative electrode active material for a lithium secondary battery may be 8.5 to 15.0 μm. Specifically, the $D_{10}$ may be 9.0 to 12.5 μm, and more specifically, 10.5 to 12.0 μm.

In one embodiment, the average particle diameter ($D_{50}$), which is a particle diameter corresponding to 50% of the cumulative volume of the negative electrode active material for a lithium secondary battery, may be 15.0 to 18.0 μm. Specifically, the average particle diameter ($D_{50}$) may be 15.9 to 17.3 μm, and more specifically, 15.9 to 17.0 μm.

In one embodiment, the particle diameter ($D_{90}$) corresponding to 90% of the cumulative volume of the negative electrode active material for a lithium secondary battery may be 20.0 to 28.0 μm. Specifically, the $D_{90}$ may be 21.0 to 27.0 μm, and more specifically, 23.0 to 26.5 μm.

When the particle diameter exceeds the upper limit value, the ratio of coarse powder is relatively high, causing a problem of spring back of the electrode. When the particle diameter is less than the lower limit value, the amount to be classified increases, causing a problem in process yield.

In one embodiment, a span (SPAN) value of the negative electrode active material for a lithium secondary battery may be 0.82 to 1.00. The span (SPAN) value is an index indicating uniformity of particles of the negative electrode active material, and may be a value calculated by (particle diameter corresponding to 90% of cumulative volume of negative electrode active material ($D_{90}$) - particle diameter corresponding to 10% of cumulative volume of negative electrode active material ($D_{10}$)) / particle diameter corresponding to 50% of cumulative volume of negative electrode active material ($D_{50}$). The span (SPAN) value may be 0.82 to 1.00, specifically 0.87 to 1.00, and more specifically 0.88 to 0.95.

When the span (SPAN) value exceeds the upper limit value, the ratio of coarse powder is relatively high, so spring back of the electrode increases, and there is a problem of non-uniformity during electrode manufacturing. When the span (SPAN) value is less than the lower limit value, the amount to be classified increases, causing a problem in process yield.

In one embodiment, pores ($cm^2/g$) by a nitrogen adsorption method of the negative electrode active material for a lithium secondary battery may be 0.0025 to 0.0055 $cm^2/g$. Specifically, the pores ($cm^2/g$) by the nitrogen adsorption method may be 0.0025 to 0.0049 $cm^2/g$, more specifically 0.0025 to 0.0038 $cm^2/g$, and more specifically 0.0025 to 0.0040 $cm^2/g$.

When the pore value by the nitrogen adsorption method exceeds the upper limit value, there is a problem in high-temperature performance during charging and discharging. When the pore value by the nitrogen adsorption method is less than the lower limit value, hardness is high, causing a problem during an electrode manufacturing process.

In one embodiment, pores measured by mercury intrusion porosimetry of the negative electrode active material for a lithium secondary battery may be 0.045 to 0.085 ml/g. Specifically, the pores measured by mercury intrusion porosimetry may be 0.050 to 0.079 ml/g, more specifically 0.050 to 0.075 ml/g, and more specifically 0.052 to 0.060 ml/g.

When the pore value measured by mercury intrusion porosimetry exceeds the upper limit value, there is a problem in high-temperature performance during discharging. When the pore value measured by mercury intrusion porosimetry is less than the lower limit value, there is a problem (during the electrode manufacturing process due to high Hardness).

In one embodiment, a ratio of pores measured by mercury intrusion porosimetry may be 5.0 to 14.0%. Specifically, the ratio of pores may be 5.0 to 12.0%, more specifically 6.0 to 10.0%, and more specifically 6.5 to 8.0%.

When the ratio of pores exceeds the upper limit value, there is a problem in high-temperature performance during discharging. When the ratio of pores is less than the lower limit value, hardness is high, causing a problem during the electrode manufacturing process.

In one embodiment, the negative electrode active material for a lithium secondary battery may satisfy the following Formula 2.

<Formula 2>

$$0.50 \leq [\text{Tap Density (g/cm}^3)]/[\text{BET Specific Surface Area (m}^2/\text{g})] \leq 1.0$$

(The [Tap Density ($g/cm^3$)] and [BET Specific Surface Area ($m^2/g$)] refer to a tap density ($g/cm^3$) and a specific surface area of the negative electrode active material).

Formula 2 refers to a value obtained by dividing the tap density of the negative electrode active material by the BET specific surface area. Formula 2 may be 0.50 to 1.0, specifically 0.60 to 1.0, and more specifically 0.70 to 0.90.

When the value of Formula 2 exceeds the upper limit value, hardness increases, causing a problem in the electrode manufacturing process. When the value of Formula 2 is less than the lower limit value, Roughness increases, causing a problem (of side reactions).

In one embodiment, regarding XRD peak values, an orientation degree ($I_{110}/I_{004}$) of the negative electrode active material may satisfy the following Formula 3.

<Formula 3>

$$50.0 \leq I_{110}/I_{004} \leq 90.0$$

(In Formula 3, $I_{004}$ refers to a peak intensity value at a 004 plane, and $I_{110}$ refers to a peak intensity value at a 110 plane).

The orientation degree may be determined using JCPDS (ASTM) data, which is standard data by X-ray diffraction, as an index, and refers to a value obtained by measuring the (004) plane and (110) plane of the negative electrode active material by XRD and then dividing the peak intensity value of the (110) plane by the peak intensity value of the (004) plane. Formula 3 may be 65.0 to 90.0, specifically 75.0 to 90.0, and more specifically 80.0 to 88.5.

When the orientation degree exceeds the upper limit value of the range, processability increases during the manufacture of the active material, reducing yield and productivity, and Roughness is high, requiring specific surface area control. When the orientation degree is less than the lower limit value of the range, there are problems of increased swelling phenomenon and poor charging characteristics.

In one embodiment, the tap density ($g/cm^3$) of the negative electrode active material for a lithium secondary battery may be 1.10 $g/cm^3$ or more. Specifically, the tap density ($g/cm^3$) may be 1.14 $g/cm^3$ or more, and more specifically, 1.25 $g/cm^3$ or more. As the tap density satisfies the aforementioned range, the electrochemical characteristics of the negative electrode active material may be excellent.

In one embodiment, the negative electrode active material for a lithium secondary battery may have a pellet density ($g/cm^3$) under 400 $kgf/cm^2$ of 1.40 to 1.80 $g/cm^3$. Specifically, the pellet density ($g/cm^3$) under 400 $kgf/cm^2$ may be 1.44 to 1.75 $g/cm^3$, more specifically 1.60 to 1.75 $g/cm^3$, and more specifically 1.65 to 1.70 $g/cm^3$.

In one embodiment, the negative electrode active material for a lithium secondary battery may have a pellet density ($g/cm^3$) under 600 $kgf/cm^2$ of 1.50 to 1.85 $g/cm^3$. Specifically, the pellet density ($g/cm^3$) under 600 $kgf/cm^2$ may be 1.69 to 1.85 $g/cm^3$, more specifically 1.70 to 1.85 $g/cm^3$, and more specifically 1.75 to 1.80 $g/cm^3$.

In one embodiment, the negative electrode active material for a lithium secondary battery may have a pellet density ($g/cm^3$) under 800 $kgf/cm^2$ of 1.60 to 1.95 $g/cm^3$. Specifically, the pellet density ($g/cm^3$) under 800 $kgf/cm^2$ may be 1.68 to 1.90 $g/cm^3$, more specifically 1.72 to 1.85 $g/cm^3$, and more specifically 1.75 to 1.80 $g/cm^3$.

In one embodiment, the negative electrode active material for a lithium secondary battery may have a pellet density ($g/cm^3$) under 1,000 $kgf/cm^2$ of 1.70 to 2.00 $g/cm^3$. Specifically, the pellet density ($g/cm^3$) under 1,000 $kgf/cm^2$ may be 1.72 to 2.00 $g/cm^3$, more specifically 1.88 to 1.98 $g/cm^3$, and more specifically 1.92 to 1.98 $g/cm^3$.

When the pellet density exceeds the upper limit value, there is a problem that side reactions occur if the structure collapses under applied pressure. When the pellet density is less than the lower limit value, there is a problem that the density of the electrode is low.

In one embodiment, the negative electrode active material for a lithium secondary battery may satisfy the following Formula 4.

$$<\text{Formula 4}>$$

$$0.100 \le (P_{1000}\text{-}P_{600})/P_{400} \le 0.119$$

(In Formula 4, $P_{400}$, $P_{600}$, and $P_{1000}$ refer to pellet densities at 400, 600, and 1,000 $kgf/cm^2$, respectively).

Formula 4 refers to a value obtained by dividing a difference value between the pellet density at 1,000 $kgf/cm^2$ and the pellet density at 600 $kgf/cm^2$ by the pellet density value at 400 $kgf/cm^2$. The value of Formula 4 means 0.100 to 0.119, specifically 0.101 to 0.118.

When the value of Formula 4 exceeds the upper limit value, electrode density is low, making it difficult to manufacture an electrode with high energy density. When the value of Formula 4 is less than the lower limit value, there is a problem that a strong rolling process is required.

According to another embodiment of the present invention, a method for manufacturing a negative electrode active material for a lithium secondary battery may include spheroidizing natural graphite particles and pressing the spheroidized natural graphite particles. By simultaneously including the spheroidizing step and the pressing step, the negative electrode active material for a lithium secondary battery can minimize internal porosity of graphite and increase particle density to secure electrode manufacturing processability, and provide a negative electrode active material with minimized expansion rate during repeated charging/discharging and suppressed side reactions.

The step of spheroidizing the natural graphite particles may include primary spheroidizing the natural graphite particles and secondary re-spheroidizing the primary spheroidized natural graphite particles.

The step of primary spheroidizing the natural graphite particles may be spheroidizing plate-shaped graphite particles in order to use a spheroidized graphite material when manufacturing a negative electrode active material for a lithium secondary battery. The step of primary spheroidizing the natural graphite particles can be performed through a general method of spheroidizing plate-shaped graphite particles.

The step of secondary re-spheroidizing the primary spheroidized natural graphite particles may be a step of additionally spheroidizing the primary spheroidized natural graphite particles by a mechanical spheroidization method. Through additional re-spheroidization, the degree of spheroidization of the graphite material increases, and physical properties of the negative electrode active material such as tap density and orientation are improved, thereby exhibiting improved effects such as suppressing expansion of the electrode. As described above, by performing high-density spheroidization through continuous processes of primary spheroidization and secondary spheroidization, pores in the negative electrode active material can be minimized.

The mechanical spheroidization method may utilize at least one method selected from Air Classifying milling, Spheronizing milling, Grinding milling, mechanofusion milling, planetary milling, Hybridization milling, shape milling, and high speed milling. By undergoing the aforementioned mechanical spheroidization method, the degree of spheroidization and density of the negative electrode active material can be improved by removing portions protruding to the outside of the primary spheroidized natural graphite particles and compressing and spheroidizing them.

The mechanical spheroidization method may be performed at a rotation speed of 500 to 4000 rpm. Specifically, the rotation speed may be 1000 to 3000 rpm, and more specifically 1000 to 1500 rpm. When performed in the above range, cracking and destruction of the graphite raw material can be minimized.

In one embodiment, the step of spheroidizing the natural graphite particles may control the average particle diameter ($D_{50}$) of the natural graphite particles to be 14.0 to 18.0 $\mu$m. Specifically, the average particle diameter ($D_{50}$) of the natural graphite particles may be controlled to 14.0 to 16.0 $\mu$m, and more specifically, 14.0 to 15.0 $\mu$m.

Specifically, after the step of secondary re-spheroidizing the primary spheroidized natural graphite particles, the method may further include a particle size classification step. The particle size classification step may classify so that the average particle diameter ($D_{50}$) of the natural graphite particles is adjusted to the aforementioned range. The particle size classification step may remove some particles of 14.0 $\mu$m or less through airflow classification and remove particles of 18.0 $\mu$m or more through sieving classification.

When it is less than the lower limit value in the particle size classification step, not only is the overall degree of spheroidization reduced due to fine particles that are not spheroidized, but also efficiency may be reduced by increasing side reactions when applied as a negative electrode active material. When it exceeds the upper limit value in the particle size classification step, it is not only difficult to control orientation up to the inside of the particle, but also it takes time for lithium diffusion when applied as a negative electrode active material due to the increase in particle size, causing a problem of deterioration in input/output characteristics.

The step of pressing the spheroidized natural graphite particles may be a step of applying pressure to the spheroidized natural graphite particles. Through the pressing step, it may be a step of imparting high density to the powder by reducing pores inside the natural graphite particles.

In one embodiment, the step of pressing the spheroidized natural graphite particles may be performed through a Cold Isostatic Press (CIP) method or a Hot Isostatic Press (HIP) method. Specifically, the pressing step may press the natural graphite particles by the Cold Isostatic Press method.

In one embodiment, the step of pressing the spheroidized natural graphite particles may be applying a pressure of 250 MPa or more. Specifically, the pressure may be 250 to 500 MPa, and more specifically, a pressure of 300 to 350 MPa may be applied.

In one embodiment, the step of pressing the spheroidized natural graphite particles may include pressing for a time of 2 to 10 minutes. Specifically, the time may be 3 minutes to 7 minutes.

When the pressing step exceeds the upper limit value of the time, there is a problem that the structure of the spherical graphite collapses. When the pressing step is less than the lower limit value of the time, there is a problem that internal pore control is difficult.

As pressure is applied in the aforementioned range, side reactions are suppressed by reducing the reaction area between graphite and electrolyte, and lifespan characteristics of the battery can be improved. As the graphite is densified, tap density increases and injectability in a high-density electrode plate can be improved. Specifically, volume expansion phenomenon during cycling can be suppressed, just as swelling phenomenon of graphite particles is suppressed.

After the step of spheroidizing the natural graphite, the method may include a grinding step. The grinding step may be a step of grinding the spheroidized natural graphite while controlling the particle size. In one embodiment, the grinding step may be controlled by physical impact. The physical impact may utilize equipment utilizing physical impact such as a Jetmill, an Air Classifier Mill or Air Current Classification Mill, and a Rollermill. The Jetmill directly grinds particles using collision of particles with high-pressure airflow, the air classifier grinds particles or classifies them according to specific gravity using airflow, and the rollermill can grind particles by inputting, compressing, and grinding particles between two or more rollers rotating in opposite directions.

In one embodiment, the grinding step may be a step of grinding the natural graphite particles to an average particle diameter ($D_{50}$) of 13.0 to 17.0 $\mu$m. Specifically, the average particle diameter ($D_{50}$) may be 13.5 to 15.0 $\mu$m.

When the average particle diameter of the natural graphite particles in the grinding step exceeds the upper limit value of the aforementioned range, the ratio of coarse powder is relatively high, so spring back of the electrode increases, and there is a problem of non-uniformity during electrode manufacturing. When the average particle diameter of the natural graphite particles in the grinding step is less than the lower limit value of the aforementioned range, the ratio of fine powder is relatively high, so the specific surface area of the powder increases and there is a processability problem during slurry manufacturing.

In one embodiment, after the pressing process, the grinding step may include a coarse grinding step and a fine grinding step. Including the at least one or more grinding steps, the particle size of the graphite particles can be controlled more precisely.

In one embodiment, the coarse grinding step may grind graphite lumps in the pressing process to have an average particle diameter ($D_{50}$) of 10 to 50 mm. Specifically, the average particle diameter ($D_{50}$) may be ground to 10 to 30 mm.

In one embodiment, the fine grinding step may grind the ground material that has undergone the coarse grinding step to an average of 10 mm or less.

After the step of secondary re-spheroidizing the primary spheroidized natural graphite particles, the method may further include a step of coating a low-crystalline carbon material on the re-spheroidized natural graphite particles. The low-crystalline carbon material may be at least one selected from the group consisting of petroleum-based pitch, coal-based pitch, mesophase pitch, heavy oil, light oil, polyvinyl alcohol (PVA), polyvinyl chloride (PVC), sucrose, phenol resin, furan resin, furfuryl alcohol, polyacrylonitrile, cellulose, styrene, polyimide, epoxy resin, and glucose.

In one embodiment, the low-crystalline carbon material may have a softening point of 200 to 270°C. Specifically, the softening point may be 240 to 260°C. When the softening point exceeds the upper limit value of the aforementioned range, there is a problem that hardness increases because the Coking Value is high. When the softening point is less than the lower limit value of the aforementioned range, there is a problem that the specific surface area increases because the Coking Value is low.

By coating the low-crystalline carbon material on the re-spheroidized natural graphite particles, there is an advantage that side reactions due to the electrolyte are suppressed when applying the negative electrode active material, so irreversible reactions are reduced and electrochemical characteristics are improved.

In the coating layer forming step of coating the low-crystalline carbon material on the surface of the re-spheroidized graphite material, the content of the low-crystalline carbon material may be included in an amount of 0.1 to 20 parts by weight based on 100 parts by weight of the re-spheroidized graphite material. When coated in the above weight part range, the graphite material and the low-crystalline carbon material can effectively form a binding layer, and excellent lifespan characteristics of the lithium secondary battery can appear due to reduction of side reactions and improvement of conductivity.

The coating layer forming step of coating the low-crystalline carbon material on the surface of the re-spheroidized graphite material forms a coating layer by a mechanical mixing method, and the mechanical mixing method may be at least one selected from the group consisting of ball milling, mechanofusion milling, shaker milling, planetary milling, attritor milling, shape milling, nauta milling, nobilta milling, high speed mixing, paddle mixing, ribbon mixing, henschel mixing, corn type mixing, thinky mixing, homo mixing, and a stirrer.

The coating layer forming step of coating the low-crystalline carbon material on the surface of the re-spheroidized graphite material further includes a heat treatment step after mechanical mixing, and the heat treatment may be a step of heat treating at a temperature of 1,000 to 1,500°C in a hydrogen, nitrogen, argon, or mixed gas atmosphere thereof. Specifically, the temperature may be 1,100 to 1,300°C.

According to another embodiment of the present invention, a lithium secondary battery may include a positive electrode including a positive electrode active material, a negative electrode including a negative electrode active material, and a separator and an electrolyte positioned between the positive electrode and the negative electrode.

The positive electrode is any one of the group consisting of $LiCoO_2$, $LiNiO_2$, $LiNi Mn O_2$, $Li_1+_zNi Mn Co_{1--} O_2$, $LiNi Co Al_zO_2$, $LiV_2O_5$, $LiTiS_2$, $LiMoS_2$, $LiMnO_2$, $LiCrO_2$, $LiMn_2O_4$, $LiFeO_2$, $LiFePO_4$, and combinations thereof, wherein x is 0.3 to 0.8, y is 0.1 to 0.45, and z may be independently 0 to 0.2. The positive electrode may be more specifically $LiFePO_4$, $LiCoO_2$, NCM811, and NCM622.

The negative electrode may use the aforementioned negative electrode active material or a negative electrode active material manufactured through the method for manufacturing a negative electrode active material.

The separator may use a conventional porous polymer film used as a separator, for example, a porous polymer film made of a polyolefin-based polymer such as ethylene homopolymer, propylene homopolymer, ethylene/propylene copolymer, ethylene/butene copolymer, ethylene/hexene copolymer, and ethylene/methacrylate copolymer, alone or by laminating them, or a conventional porous non-woven fabric, for example, a non-woven fabric made of high melting point glass fiber, polyethylene terephthalate fiber, etc., but this is a non-limiting example.

In the electrolyte, lithium salts that can be included as the electrolyte may be used without limitation as those commonly used in electrolytes for lithium secondary batteries. For example, anions of the lithium salt may be any one selected from the group consisting of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

In the electrolyte, as the organic solvent, those commonly used in electrolytes for lithium secondary batteries may be used without limitation, and typically, any one selected from the group consisting of propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulfolane, gamma-butyrolactone, propylene sulfite, and tetrahydrofuran, or a mixture of two or more thereof may be typically used.

The lithium secondary battery may be disposed in a battery case. The battery case is a non-limiting example and may be any one of a cylindrical type using a can, a prismatic type, a pouch type, and a coin type.

Hereinafter, embodiments of the present invention will be described in detail so that those skilled in the art to which the present invention belongs can easily practice them. However, the present invention may be implemented in various different forms and is not limited to the embodiments described herein.

**(Manufacture of Negative Electrode Active Material)**

**<Example 1>**

**(1) Natural Graphite Powder Preparation Step**

Primary spheroidized natural graphite powder having an average particle diameter ($D_{50}$) of 16 $\mu$m was prepared.

**(2) Cold Isostatic Pressing (CIP)**

Thereafter, the spheroidized natural graphite powder was filled into a molding mold, and then a molded body was manufactured through a press process. At this time, the applied molding pressure was 300 MPa, and the time was 5 minutes. In the molding process, cold isostatic pressing was applied.

**(3) Grinding Step**

The molded sample is obtained as a graphite lump of several tens of cm, and is ground to 10 to 50 mm through a coarse grinder. The coarse ground graphite particles are ground to 10 mm or less with a Pin Mill, and fine grinding proceeds in two processes of disintegrating graphite particles attached by an airflow classifier.

**(4) Coating and Heat Treatment Process**

5 parts by weight of pitch having a softening point of 250°C based on 100 parts by weight of the ground sample was mixed with the ground sample. Thereafter, after mixing at 2,500 rpm for 10 minutes, heat treatment was performed at 1,200°C for 13 hours to obtain a negative electrode active material.

**(Manufacture of Negative Electrode)**

The negative electrode active material powder manufactured by the above method, a conductive material, styrene butadiene rubber (SBR) as a binder, and carboxymethyl cellulose (CMC) as a thickener were mixed in a mass ratio of Coin Half Cell (CHC) - 96.3:1:1.5:1.2 and Full Cell (FC) - 95.6:1.0:1.1:2.3, and water was added to prepare a negative electrode active material slurry. The negative electrode active material slurry was applied to a copper (Cu) foil current collector, followed by drying and rolling to manufacture negative electrodes, respectively. At this time, the loading of the negative electrode was manufactured to be CHC - 3.6 mAh/cm$^2$, FC - 3.95 mAh/cm$^2$.

At this time, a separator made of a porous polypropylene film was inserted between the working electrode and the counter electrode, and as an electrolyte, one in which 0.5% by weight of vinylene carbonate (VC) based on the solvent was added to a mixed solvent having a mixing volume of ethylene carbonate (EC) and ethylmethyl carbonate (EMC) of 20:80, and 1.0 M concentration of $LiPF_6$ was dissolved was used.

**<Example 2>**

A negative electrode active material and a lithium secondary battery were manufactured in the same manner as in Example 1, except that the high-density spheroidizing step was performed as follows in Example 1. A detailed description of the high-density spheroidizing step is as follows.

**(1)-1 High-density Spheroidizing Step**

After preparing natural graphite powder, the natural graphite powder was subjected to secondary mechanical spheroidization treatment in a Spheronizer at 1,000 rpm for 15 minutes, and fine powder and coarse powder particles were removed through airflow classification and sieving classification to manufacture re-spheroidized high-density re-spheroidized natural graphite particles having an average particle diameter ($D_{50}$) of 14.7 $\mu$m.

**<Comparative Example 1>**

A negative electrode active material and a lithium secondary battery were manufactured in the same manner as in Example 1, except that the Cold Isostatic Pressing (CIP) step was not performed.

**<Comparative Example 2>**

A negative electrode active material and a lithium secondary battery were manufactured in the same manner as in Example 2, except that the Cold Isostatic Pressing (CIP) step was not performed.

**<Evaluation Example 1>: Physical Properties of Negative Electrode Active Material**

Table 1 below shows physical properties of the negative electrode active materials of Examples 1 and 2 and Comparative Examples 1 and 2. The physical properties of the negative electrode active material were measured by the following methods.

$D_{10}$, $D_{50}$, $D_{90}$ ($\mu$m): $D_{10}$, $D_{50}$, $D_{90}$ measured particle diameters corresponding to 1%, 10%, 50%, 90% of a cumulative volume and a maximum value of the negative electrode active material measured using a Laser Diffraction Method, respectively.

Tap Density ($g/cm^3$): Tap density was measured using an AT-2 model of Quantachrome, and a ratio of weight per volume was obtained by filling a test container with a sample in a volume of 20 ml, tapping it 3000 times, and then measuring the volume and the weight of the sample.

BET ($m^2/g$): It refers to a specific surface area which is a total surface area of a material per unit mass, and was measured using a BET method (Surface Area and Porosity Analyzer) (Micromeritics, ASAP2020).

Orientation Degree ($I_{110}/I_{004}$): Using XRD equipment of Bruker, XRD peak intensity values of a 004 plane and a 110 plane of the negative electrode active material were measured, and then the peak intensity value of the 110 plane was divided by the peak intensity value of the 004 plane.

Nitrogen Pores ($cm^3/g$): Nitrogen was adsorbed to a sample using equipment of Micrometics, ASAP2020, and pore size and volume were measured within a range of 150 nm or less.

Mercury Pores (ml/g): The volume of mercury intruded into a portion determined as a pore within a range of 3 nm to 2000 nm was measured using equipment of Micromeritics (Autopore V 9620).

Mercury Pores (%): It was measured by a method of assuming a total volume as 1 using equipment of Micromeritics (Autopore V 9620), and subtracting a value obtained by dividing a density relative to a graphite volume from an apparent density including a volume of pores from the total volume.

Pellet Density ($g/cm^3$): It was measured at 400, 600, 800, and 1,000 $kgf/cm^3$ respectively by a method of filling powder into an insulation mold using equipment of HanTech, Powder Resistivity Measurement System, applying pressure, and analyzing property changes.

[Table 1]

| | Particle Size Distribution (μm) | | | $D_{90}/D_{10}$ | (D90-D10)/D50 | Tap Density [g/cm$^3$] | BET (m$^2$/g) | Nitrogen Pores (cm$^3$/g) | Mercury Pores (ml/g) | Mercury Pores (%) | Tap Density/BET | Orientation Degree $I_{110}/I_{004}$ |
|---|---|---|---|---|---|---|---|---|---|---|---|---|
| | $D_{10}$ | $D_{50}$ | $D_{90}$ | | | | | | | | | |
| Ex 1 | 11.4 | 17.3 | 25.8 | 2.26 | 0.83 | 1.14 | 2.22 | 0.0049 | 0.076 | 12.0 | 0.51 | 54.7 |
| Ex 2 | 10.7 | 16.0 | 25.1 | 2.35 | 0.90 | 1.25 | 1.49 | 0.0034 | 0.055 | 7.4 | 0.84 | 86.8 |
| Comp Ex 1 | 10.7 | 17.3 | 25.6 | 2.39 | 0.86 | 1.09 | 2.87 | 0.0059 | 0.134 | 15.1 | 0.38 | 40.5 |
| Comp Ex 2 | 10.7 | 15.8 | 23.5 | 2.20 | 0.81 | 1.19 | 2.13 | 0.0039 | 0.087 | 14.2 | 0.56 | 60.2 |

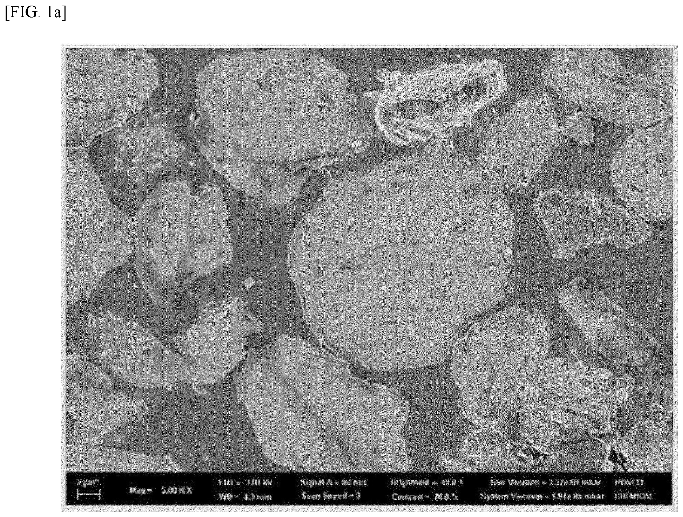

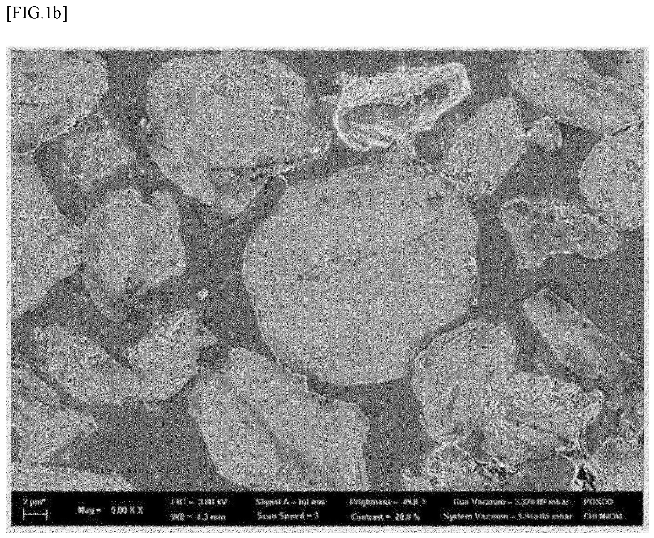

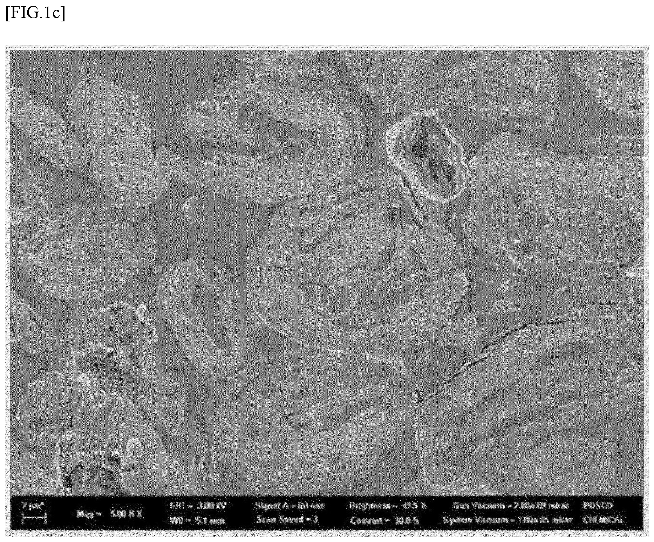

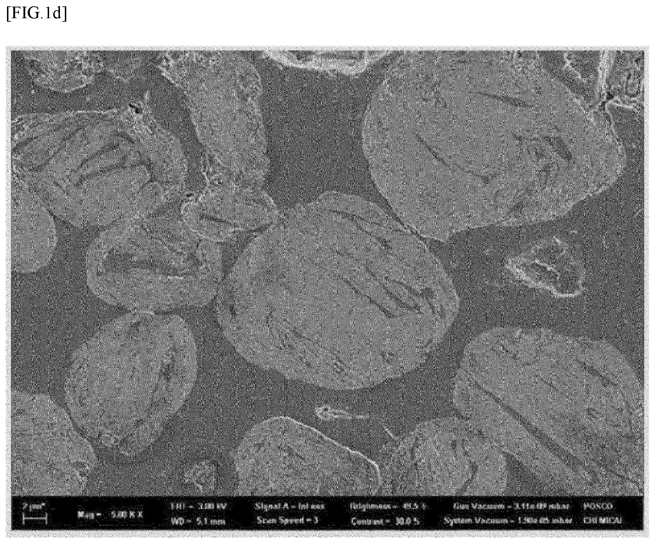

Looking at Table 1, comparing Examples 1 and 2 with Comparative Examples 1 and 2, it was confirmed that the particle size distribution, tap density, BET, nitrogen pores, mercury pores, orientation degree, and the ranges of $D_{90}/D_{10}$ and Tap density/BET formulas are included in the scope of the present invention. Also, comparing Examples 1 and 2, it was confirmed that Example 2 has excellent tap density, lower specific surface area, and lower porosity values due to nitrogen pores and mercury pores than Example 1. FIGS. 1a to 1d show SEM photographs of cross-sections of negative electrode active materials according to Examples and Comparative Examples of the present invention.

FIGS. 1a to 1d are SEM photographs of Example 1, Example 2, Comparative Example 1, and Comparative Example 2, respectively. Referring to FIGS. 1a to 1d, the porosity of the graphite cross-section can be confirmed. Looking at FIGS. 1a to 1d and Table 1, the value for nitrogen pores decreases in the order of Comparative Example 1, Example 1, Comparative Example 2, and Example 2, and mercury pores decrease in the order of Comparative Example 1, Comparative Example 2, Example 1, and Example 2, confirming that porosity decreased through CIP.

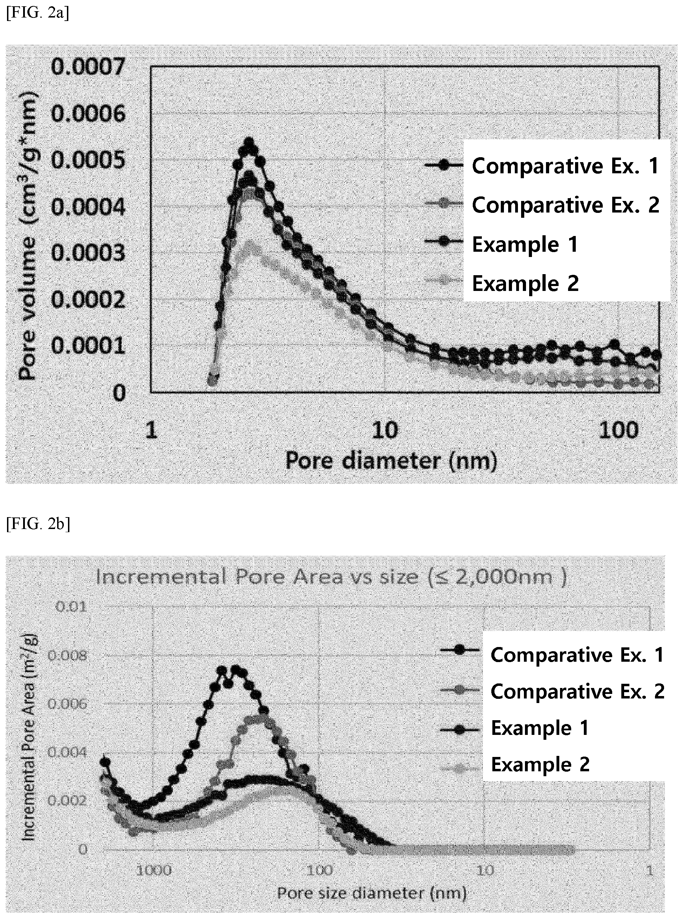

FIGS. 2a and 2b are graphs of nitrogen porosity and mercury porosity according to Examples and Comparative Examples of the present invention.

FIG. 2a shows a nitrogen porosity graph according to the gas adsorption method of Examples and Comparative Examples of the present invention. FIG. 2b shows a mercury porosity graph according to the mercury adsorption method of Examples and Comparative Examples of the present invention.

### <Evaluation Example 2>: Pellet Density of Negative Electrode Active Material

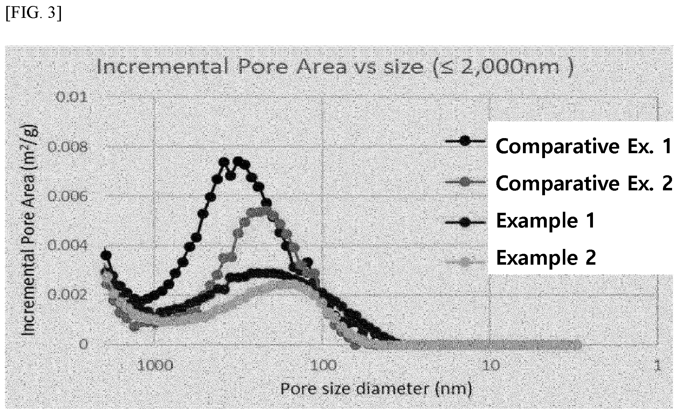

FIG. 3 is a graph showing pellet density according to Examples and Comparative Examples of the present invention.

Table 2 below shows pellet densities of the negative electrode active materials manufactured by Examples 1 and 2 and Comparative Examples 1 and 2.

[Table 2]

|  | Pellet Density (g/cm$^3$) | | | | Formula 4 |
|---|---|---|---|---|---|
|  | 400 | 600 | 800 | 1000 | (P1000-P600)/P400* |
| Category | [kg·f/cm$^2$] | | | | |
| Ex 1 | 1.44 | 1.55 | 1.64 | 1.72 | 0.118 |
| Ex 2 | 1.68 | 1.77 | 1.86 | 1.95 | 0.107 |
| Comp Ex 1 | 1.35 | 1.47 | 1.57 | 1.65 | 0.133 |
| Comp Ex 2 | 1.58 | 1.67 | 1.77 | 1.86 | 0.120 |
| *$P_{400}$, $P_{600}$, $P_{1000}$ refer to pellet densities at 400, 600, and 1,000 kgf/cm$^2$, respectively | | | | | |

Looking at Table 2 and FIG. 3, in pellet density, it can be confirmed that Examples are superior to Comparative Examples. Also, in pellet density, it was confirmed that in Examples 1 and 2, Formula 4 is included in the scope of the present invention, but Comparative Examples 1 and 2 are not included in the scope of the present invention.

### <Evaluation Example 3>: Electrochemical Characteristics

Table 3 below shows electrochemical characteristics in Coin Half Cell and Full Cell manufactured from the negative electrode active materials manufactured by Examples 1 and 2 and Comparative Examples 1 and 2.

The measurement methods for the electrochemical characteristics are as follows.

Evaluation of Initial Capacity (mAh/g) and Initial Efficiency (%) of Coin Half Cell: After fabricating a lithium secondary battery half cell, it was aged at 25°C for 48 hours, and then a charge/discharge test was performed. Initial capacity and efficiency were measured after performing 3 charge/discharge formations under conditions of 25°C, a potential range of 0.005 to 1.5 V, and a current density of 0.36 mA/cm$^2$ using an electrochemical analyzer (WonATech).

Evaluation of Initial Capacity (mAh) and Initial Efficiency (%) of Full Cell: After fabricating a lithium secondary battery cell, it was aged at 25°C for 30 hours, and then a charge/discharge test was performed. For initial capacity evaluation, the capacity was designed to be 770 mAh based on 0.33C, and after charging to 4.2V at a constant current of 0.1C, it was switched to a constant voltage and charging was performed until the termination current reached 0.05C. After having a rest time of 10 minutes after charging, discharging was performed until 2.75V was reached at a constant current of 0.1C with 770 mAh/g as a reference capacity.

Evaluation of Expansion Rate (%): After discharging the coin cell using equipment of Mitutoyo, micrometer, the cell was disassembled and the thickness of the negative electrode was measured.

Lifespan Characteristics (25°C or 45°C): A constant current of 1C was applied, and when the voltage reached 4.25V, the constant voltage was maintained and charging was performed until the current reached 0.05C. After giving a rest period of 10 minutes, a constant current of 1C was applied and discharging was performed until the voltage reached 2.5V. Lifespan evaluation was performed at room temperature 25°C and high temperature 45°C, respectively.

[Table 3]

|  | Coin Half Cell | | | Full Cell | |
| --- | --- | --- | --- | --- | --- |
|  | Discharge Capacity [mAh/g] | Initial Efficiency [%] | Expansion Rate [%] | Room Temperature Lifespan 0.5C/1C cycle [%] | High Temperature Lifespan 0.5C/0.5C cycle [%] |
| Ex 1 | 363.5 | 93.8 | 19.7 | 95.8 | 90.5 |
| Ex 2 | 360.2 | 93.9 | 19.4 | 97.4 | 92.0 |
| Comp Ex 1 | 363.4 | 94.0 | 23.8 | 95.3 | 89.7 |
| Comp Ex 2 | 360.4 | 93.5 | 21.5 | 95.8 | 90.0 |

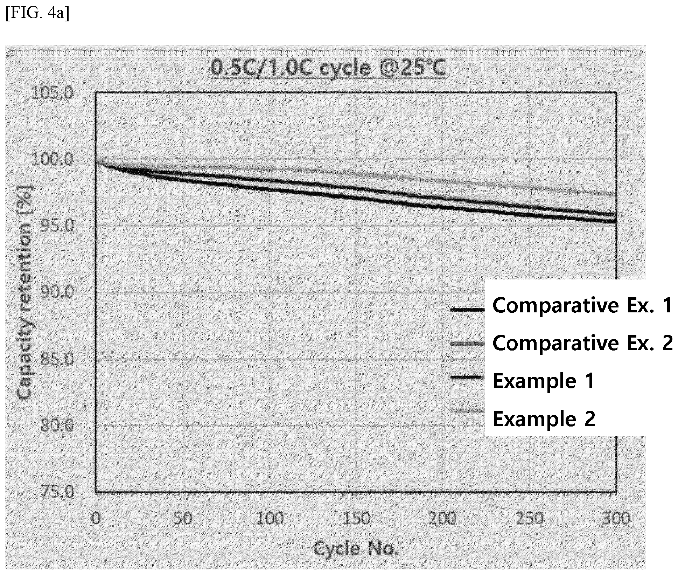

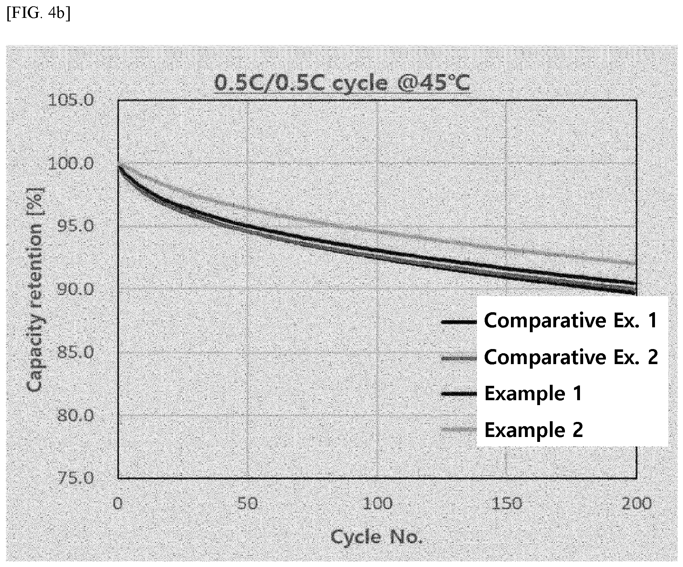

Referring to Table 3, in the electrochemical characteristics of the battery, it was confirmed that Examples 1 and 2 are superior to Comparative Examples 1 and 2. Specifically, it was confirmed that Examples 1 and 2 have excellent effects in discharge capacity and initial efficiency, have low expansion rates, and have excellent room temperature lifespan and high temperature lifespan characteristics compared to Comparative Examples 1 and 2. FIGS. 4a and 4b are graphs of room temperature lifespan and high temperature lifespan characteristics according to Examples and Comparative Examples of the present invention.

FIG. 4a shows characteristics of Examples and Comparative Examples at room temperature of 25°C, and FIG. 4b shows characteristics of Examples and Comparative Examples at high temperature of 45°C. Referring to FIGS. 4a and 4b, comparing Examples 1 and 2 with Comparative Examples 1 and 2, it can be confirmed that lifespan characteristics of Examples 1 and 2 are excellent. Also, comparing Examples 1 and 2, it was confirmed that the effect of Example 2 which underwent the high-density spheroidization and Cold Isostatic Pressing step is more excellent.

Although preferred embodiments have been described in detail above, the scope of rights of the present invention is not limited thereto, and various modifications and improvements by those skilled in the art using the basic concept defined in the following claims also belong to the scope of rights of the present invention.

**Claims**

1. A negative electrode active material for a lithium secondary battery, comprising natural

   graphite, and
   satisfying the following Formula 1:

   $$\text{<Formula 1>}$$

   $$2.23 \leq [D_{90}]/[D_{10}] \leq 2.37$$

   (In Formula 1, $[D_{10}]$ and $[D_{90}]$ refer to particle diameters corresponding to 10% and 90% of a cumulative volume of the negative electrode active material measured using a Laser Diffraction Method).

2. The negative electrode active material for a lithium secondary battery of claim 1, wherein:
   Formula 1 is 2.26 to 2.36.

3. The negative electrode active material for a lithium secondary battery of claim 1, wherein:
   an average particle diameter ($D_{50}$) of the negative electrode active material is 15.0 to 18.0 $\mu$m.

4. The negative electrode active material for a lithium secondary battery of claim 1, wherein:
   pores measured by mercury intrusion porosimetry are 0.045 to 0.085 ml/g.

5. The negative electrode active material for a lithium secondary battery of claim 1, wherein:
a ratio of pores measured by mercury intrusion porosimetry is 5.0 to 14.0%.

6. The negative electrode active material for a lithium secondary battery of claim 1, wherein:
the negative electrode active material satisfies the following Formula 2:

$$\text{<Formula 2>}$$

$$0.50 \leq [\text{Tap Density (g/cm}^3)]/[\text{BET Specific Surface Area (m}^2/\text{g})] \leq 1.0$$

(The [Tap Density $(g/cm^3)$] and [BET Specific Surface Area $(m^2/g)$] refer to a tap density $(g/cm^3)$ and a specific surface area of the negative electrode active material).

7. The negative electrode active material for a lithium secondary battery of claim 1, wherein:
in XRD peak values, an orientation degree ($I_{110}/I_{004}$) satisfies the following Formula 3:

$$\text{<Formula 3>}$$

$$50.0 \leq I_{110}/I_{004} \leq 90.0$$

(In Formula 3, $I_{004}$ refers to a peak intensity value at a 004 plane, and $I_{110}$ refers to a peak intensity value at a 110 plane).

8. The negative electrode active material for a lithium secondary battery of claim 1, wherein:
a pellet density $(g/cm^3)$ under 600 $kgf/cm^2$ is 1.50 to 1.85.

9. The negative electrode active material for a lithium secondary battery of claim 1, wherein:
the negative electrode active material satisfies the following Formula 4:

$$\text{<Formula 4>}$$

$$0.100 \leq (P_{1000}-P_{600})/P_{400} \leq 0.119$$

(In Formula 4, $P_{400}$, $P_{600}$, and $P_{1000}$ refer to pellet densities at 400, 600, and 1,000 $kgf/cm^2$, respectively).

10. A method for manufacturing a negative electrode active material for a lithium secondary battery, comprising:

spheroidizing natural graphite particles; and
pressing the spheroidized natural graphite particles,
wherein the negative electrode active material satisfies the following Formula 1:

$$\text{<Formula 1>}$$

$$2.23 \leq [D_{90}]/[D_{10}] \leq 2.37$$

(In Formula 1, $[D_{10}]$ and $[D_{90}]$ refer to particle diameters corresponding to 10% and 90% of a cumulative volume of the negative electrode active material measured using a Laser Diffraction Method).

11. The method for manufacturing a negative electrode active material for a lithium secondary battery of claim 10, wherein:

the step of spheroidizing the natural graphite involves:
primary spheroidizing the natural graphite particles; and
secondary re-spheroidizing the primary spheroidized natural graphite particles.

12. The method for manufacturing a negative electrode active material for a lithium secondary battery of claim 10, wherein:

the step of pressing the spheroidized natural graphite particles is performed through a Cold Isostatic Press (CIP) method or a Hot Isostatic Press (HIP) method.

13. The method for manufacturing a negative electrode active material for a lithium secondary battery of claim 12, wherein:

the step of pressing the spheroidized natural graphite particles involves applying a pressure of 250 MPa or more.

14. The method for manufacturing a negative electrode active material for a lithium secondary battery of claim 10, wherein:

the step of spheroidizing the natural graphite particles involves controlling an average particle diameter ($D_{50}$) of the natural graphite particles to be 14.0 to 18.0 $\mu$m.

15. The method for manufacturing a negative electrode active material for a lithium secondary battery of claim 10, further comprising:

after the step of secondary re-spheroidizing the primary spheroidized natural graphite particles, coating a low-crystalline carbon material on the re-spheroidized natural graphite particles.

[FIG. 1a]

[FIG.1b]

[FIG.1c]

[FIG.1d]

[FIG. 2a]

[FIG. 2b]

[FIG. 3]

[FIG. 4a]

0.5C/1.0C cycle @25°C

Legend: Comparative Ex. 1, Comparative Ex. 2, Example 1, Example 2

[FIG. 4b]

0.5C/0.5C cycle @45°C

## INTERNATIONAL SEARCH REPORT

| International application No. |
| --- |
| **PCT/KR2024/096057** |

### A. CLASSIFICATION OF SUBJECT MATTER

**H01M 4/583**(2010.01)i; **C01B 32/21**(2017.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/583(2010.01); C01B 31/04(2006.01); C01B 32/21(2017.01); H01M 10/0525(2010.01); H01M 4/133(2010.01); H01M 4/36(2006.01); H01M 4/58(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 천연 흑연(natural graphite), 음극 활물질(anode active material), 리튬 이차전지 (lithium secondary battery), D90/D10, 냉간 정수압 프레스법(cold isostatic press, CIP)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2014-0140952 A (POSCO CHEMTECH CO., LTD.) 10 December 2014 (2014-12-10)<br>See claims 1, 2, 6, 7, 9, 10, 13 and 15; paragraphs [0044], [0069] and [0117]; and table 1. | 1-15 |
| Y | US 2023-0275227 A1 (SHOWA DENKO MATERIALS CO., LTD.) 31 August 2023 (2023-08-31)<br>See claim 1; and paragraphs [0032], [0056]-[0058] and [0122]. | 1-15 |
| A | EP 3863093 A1 (LG ENERGY SOLUTION, LTD.) 11 August 2021 (2021-08-11)<br>See claims 1-13. | 1-15 |
| A | JP 2000-090930 A (MATSUSHITA ELECTRIC IND. CO., LTD.) 31 March 2000 (2000-03-31)<br>See claims 1-7. | 1-15 |
| A | KR 10-2021-0071836 A (LG ENERGY SOLUTION, LTD.) 16 June 2021 (2021-06-16)<br>See claims 1-13. | 1-15 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **25 November 2024** | **27 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/096057**

| Patent document cited in search report | | | Publication date (day/month/year) | Patent family member(s) | | | Publication date (day/month/year) |
|---|---|---|---|---|---|---|---|
| KR | 10-2014-0140952 | A | 10 December 2014 | None | | | |
| US | 2023-0275227 | A1 | 31 August 2023 | CN | 116438691 | A | 14 July 2023 |
| | | | | EP | 4148832 | A1 | 15 March 2023 |
| | | | | JP | 2022-215126 | A1 | 13 October 2022 |
| | | | | JP | 2024-138433 | A | 08 October 2024 |
| | | | | JP | 7521693 | B2 | 24 July 2024 |
| | | | | KR | 10-2023-0154788 | A | 09 November 2023 |
| | | | | WO | 2022-215126 | A1 | 13 October 2022 |
| EP | 3863093 | A1 | 11 August 2021 | CN | 113748545 | A | 03 December 2021 |
| | | | | EP | 3863093 | B1 | 26 April 2023 |
| | | | | KR | 10-2020-0116869 | A | 13 October 2020 |
| | | | | KR | 10-2517639 | B1 | 05 April 2023 |
| | | | | US | 11881584 | B2 | 23 January 2024 |
| | | | | US | 2022-0006087 | A1 | 06 January 2022 |
| | | | | WO | 2020-204631 | A1 | 08 October 2020 |
| JP | 2000-090930 | A | 31 March 2000 | None | | | |
| KR | 10-2021-0071836 | A | 16 June 2021 | CN | 114586199 | A | 03 June 2022 |
| | | | | EP | 4033570 | A2 | 27 July 2022 |
| | | | | US | 2022-0371899 | A1 | 24 November 2022 |
| | | | | WO | 2021-112516 | A2 | 10 June 2021 |
| | | | | WO | 2021-112516 | A3 | 29 July 2021 |

Form PCT/ISA/210 (patent family annex) (July 2022)